# EUROPEAN PATENT SPECIFICATION

(11) **EP 0 671 740 B1**
(45) Date of publication and mention of the grant of the patent: **19.05.1999**
(21) Application number: 94830075.1
(22) Date of filing: 18.02.1994
(51) Int. Cl.: G11B 23/113

(54) **Cassette feeding apparatus in an automatic machine for loading tape into cassettes and method carried out thereby**
Beschicktigungsanlage für Kassetten in einer automatischen Maschine für die Aufladung von Bändern in die Kassetten und damit durchgeführtes Verfahren zum Laden
Appareil d'alimentation de cassettes dans une machine pour le chargement automatique de bandes dans des cassettes et méthode de chargement effectuée par celle-ci

(43) Date of publication of application: 13.09.1995
(73) Proprietor: TAPEMATIC S.p.A., I-20052 Monza (Milano) (IT)
(72) Inventor: Perego, Luciano, I-20050 Mezzago (Milano) (IT)
(74) Representative: Righetti, Giuseppe

(56) References cited:
- EP-A- 0 218 265
- EP-A- 0 281 884
- EP-A- 0 405 046
- US-A- 3 814 343
- US-A- 3 964 100

## Description

The present invention relates to a cassette feeding apparatus in an automatic machine for loading tape into cassettes comprising: a loading magazine located at an overhead position relative to a processing station of said cassette loading machine and engaging a plurality of horizontally oriented cassettes disposed consecutively upon each other to form an upright stack; transferring means for picking up from said stack a cassette situated at the bottom and transferring it to said processing station while disposing the cassette according to a substantially vertical orientation.

It is known that there are automatic machines for loading tape into cassettes of the type in which the cassettes to be loaded with the magnetic tape are disposed in a loading magazine located above a processing station designed to wind the magnetic tape into the individual cassettes. This loading or storage magazine is adapted to receive a given amount of cassettes to be processed which are horizontally oriented and disposed consecutively upon each other to form an upright stack, from the lowermost end of which the cassettes are picked up one by one upon the action of transferring means engaging them sequentially in the processing station for carrying out the tape loading operations.

One example of such a cassette loading machine is given in the European Patent No. 0 281 884 by the same inventor, which is herein considered as the most pertinent state of the art.

In such a feeding apparatus, the cassette stack located in the loading magazine is supported by a plate-like element movable from a rest position in which it is oriented in a horizontal plane to offer a resting seat to the cassette stack, to a second position in which it is inclined at an angle of about 30° in order to cause the bottommost cassette in said stack to run from the plate-like element to a pair of guide plates extending vertically between the loading magazine and the processing station of the cassette loading machine, by which guide plates said cassette is engaged at the opposite sides thereof.

In greater detail the guide plates engage the cassette through corresponding slide grooves extending parallelly to each other according to a curvilinear extension. The cassette, while running along said slide grooves under gravity, is gradually rotated from the inclined orientation exhibited when entering the guide plates, to a vertical orientation taken close to the lower end portions of the slide grooves. Such lower end portions are arranged in alignment with corresponding fitting guides provided in the processing station and designed to receive the cassette coming out of the guide plates and operatively engage it in the processing station itself.

The cassette descent along the slide guides is assisted by a support element operatively disposed between the guide plates and vertically movable between said plates in order to cause the gradual descent of the cassette as far as it reaches the fitting guides disposed in the processing station.

The foregoing being stated, it will be noted that the above described apparatus may appear inappropriate for use in some situations in which the loading magazine is required to be disposed as much as possible close to the processing station of the cassette loading machine. In fact, the path travelled over by the cassette so that it may reach the complete orientation according to a vertical position by sliding along the guide plates makes it necessary to provide an important room between the magazine and the processing station.

In addition, the time necessary to eject the cassette from the loading magazine, to bring it into engagement between the guide plates and move it along the whole extension of the slide grooves greatly and undesirably impairs the increasingly growing requirements concerning enhancement of the production rate in cassette loading machines.

In view of the above, the main object of the present invention is substantially to solve the drawbacks of the known art by providing a feeding apparatus capable of operating according to a method adapted to enable a substantial reduction in space between the loading magazine and the processing station of the cassette loading machine, as well as an important reduction in the time necessary to transfer the individual cassettes from the magazine to the processing station.

The foregoing and further objects that will become more apparent in the course of the present description are substantially achieved by a cassette feeding apparatus in an automatic machine for loading tape into said cassettes, said transferring means comprises: a collapsible support oscillatably engaged under the loading magazine; drive means for moving the collapsible support between a rest position in which it is substantially oriented in a horizontal plane for supporting at least one cassette disposed at the bottom in said stack, and an overturned or dropped position in which it is oriented in an angle to the horizontal plane, characterized in that the collapsible support in the over turned or dropped position is oriented in a substantially vertical plane for orienting said cassette vertically; at least one retention element is operatively engaged to the collapsible support and movable between a thrust condition in which it acts on said cassette to retain it on the collapsible support, and a release condition in which it is disengaged from said cassette; first actuating means are acting on the first retention element for selectively moving it to the thrust condition when the collapsible support is in its rest position, and to the release condition when the collapsible support is in the dropped position, to let the cassette fall vertically into said processing station.

Still in accordance with the present invention, said apparatus puts into practice a new method of feeding tape cassettes in an automatic machine for loading tape into said cassettes, comprising the steps of arranging a plurality of cassettes in a horizontal orientation one upon the other to form a stack extending vertically at an overhead position relative to a processing station of said cassette loading machine; disposing at least one cassette situated at a lowermost position in said stack onto a collapsible support arranged in a rest position in which it horizontally supports the cassette itself while the cassette is still located at the lowermost position in said stack; moving the collapsible support to a dropped position in which the cassette is oriented in an angle to the horizontal orientation, characterized by maintaining the positioning of said cassette on the collapsible support by retaining means ;
- said dropped position of the collapsible support is a position in which the cassette retained thereon is oriented in a substantially vertical plane; releasing the cassette from the collapsible support to let it fall vertically into said processing station.

Further features and advantages will be best understood from the detailed description of a preferred embodiment of a cassette feeding apparatus in an automatic machine for loading tape into said cassettes and a method put into practice by said apparatus, according to the present invention. This description will be given hereinafter, by way of non-limiting example, with reference to the accompanying drawings, in which:
- Fig. 1 is a diagrammatic perspective view showing the apparatus in a waiting operating step, which is maintained while the cassette loading machine with which the apparatus is associated is about to wind tape into a cassette;
- Fig. 2 is a diagrammatic perspective view of the apparatus in an operating step in which a cassette to be processed is engaged to a collapsible support that has disposed the cassette in a vertical orientation;
- Fig. 3 shows an operating step next to the one shown in Fig. 2, in which the cassette to be processed has been released from the collapsible support and is engaged to fitting guide pieces associated with the processing station of the cassette loading machine;
- Fig. 4 shows a construction detail of the apparatus in question to an enlarged scale.

Referring to the drawings, a cassette feeding apparatus in an automatic machine for loading tape into cassettes according to the present invention has been generally identified by reference numeral 1.

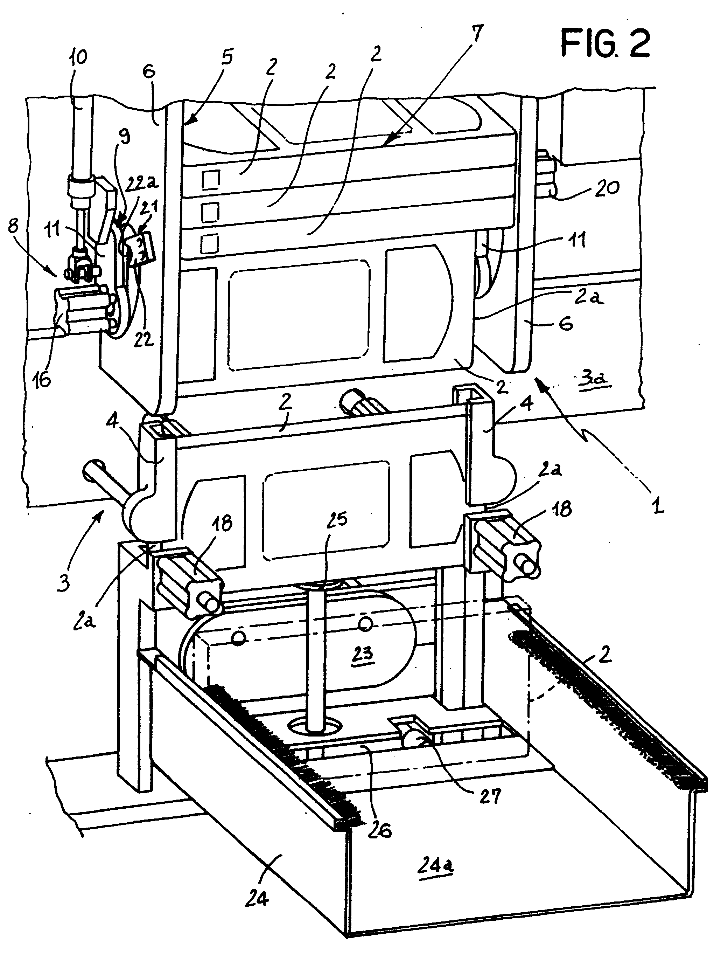

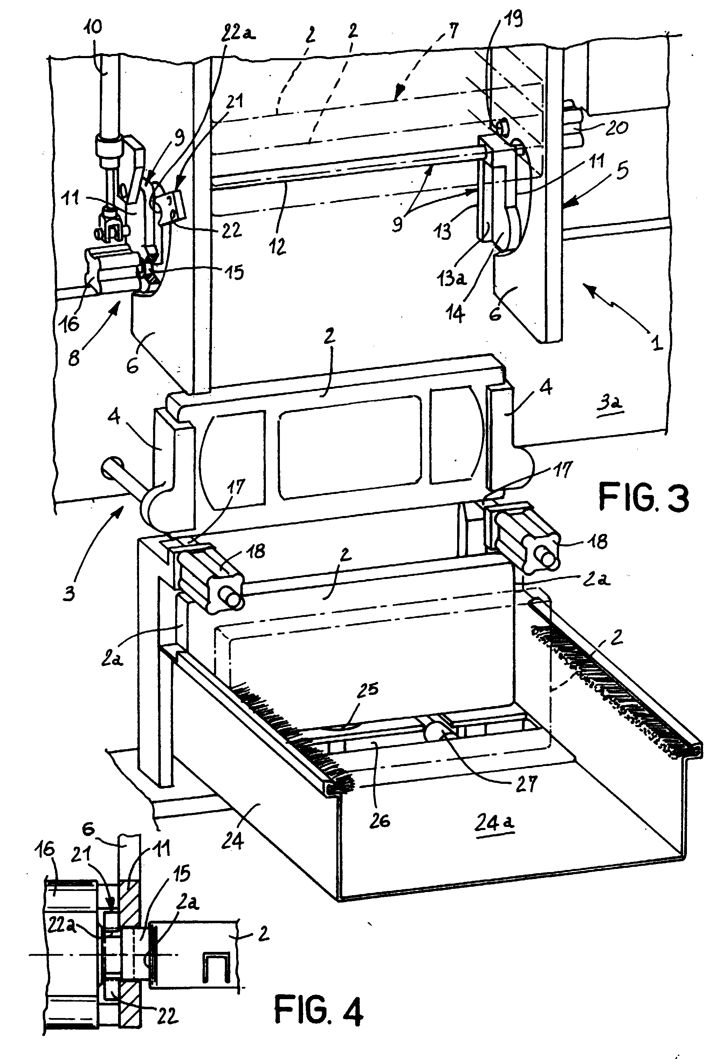

The apparatus 1 is mounted to a cassette loading machine, not shown as a whole as known per se and conventional, designed to operate sequentially on a plurality of cassettes 2 to be processed in order to wind a predetermined amount of magnetic tape into each of said cassettes. The magnetic tape winding operations take place at a processing station 3, not shown in detail as also known per se and conventional, exposed on a front wall 3a of the cassette loading machine. Associated with the processing station 3 in known manner is a pair of fitting guide pieces 4 designed to operatively engage the individual cassettes 2 at the opposite sides 2a thereof and selectively movable between a retracted position in which they are close to the front wall 3a for bringing the cassette 2 into engagement with the different members (not shown as known) of the processing station 3 for executing the tape winding operations, and an extended position in which, as shown in Figs. 2 and 3, they are spaced apart from the front wall for causing the release of a loaded cassette and the engagement of a new cassette 2 to be processed fed by the apparatus 1, as better clarified in the following.

The cassettes 2 to be processed are stored in a loading magazine 5 disposed overhead relative to the processing station 3. In the embodiment shown the loading magazine 5 essentially comprises two holding plates 6 disposed vertically and jutting out from the front wall 3a. The cassettes 2 engaged between the holding plates 6 are oriented horizontally and disposed consecutively upon each other to form a stack 7 vertically standing between the plates themselves.

The apparatus 1 further comprises transferring means 8 that, at each operating cycle, picks up from the stack 7 one cassette 3 situated at the bottom and transfers it to the processing station 3 where it is disposed according to a substantially vertical orientation. In greater detail, according to the apparatus in question feeding of the processing station 3 with the individual cassettes 2 takes place following a method in which, once the cassettes 2 have been arranged to form the stack 7 at an overhead position relative to the processing station 3, the following steps are carried out:
- disposing at least one cassette 2 situated at a lowermost position in said stack 7 onto a collapsible support 9 arranged in a rest position in which it horizontally supports the cassette itself;
- maintaining the positioning of said cassette 2 on the collapsible support 9;
- moving the collapsible support 9 to a dropped position in which the cassette 2 retained thereon is oriented in a substantially vertical plane;
- releasing the cassette from the collapsible support 9 to let it fall vertically into said processing station 3.

To this end, a drive means 10 is associated with the collapsible support 9 rotatably engaged between the holding plates 6 of the magazine 5 according to an horizontal axis extending adjacent to the front wall 3a of the cassette loading machine, which drive means 10 selectively moves the collapsible support between a rest position in which it is substantially oriented in a horizontal plane for supporting at least one cassette 2 disposed at the bottom in the stack 7 and a dropped position in which it is oriented in a substantially vertical plane for orienting said cassette vertically. In the example shown, the drive means 10 essentially comprises a double acting primary cylinder operatively engaged between one of said holding plates 6 and the collapsible support 9 and operable upon command of an electronic control unit, not shown or described as known per se and at all events not of importance to the ends of the invention, which governs the operation of all members of the cassette loading machine.

In a preferential solution, the collapsible support 9 essentially comprises a pair of arms 11 extending in cantilevered fashion from a horizontal pivot stem 12 rotatably engaged between the holding plates 6. Each of the arms 11 has a base portion 13 designed to offer a resting seat 13a for the cassette 2 when the collapsible support 9 is in its rest position, and a side portion 14 designed to act on one of the cassette sides 2a for guiding the fall of said cassette when the collapsible support is in the dropped position.

Operatively engaged to the collapsible support 9 and more particularly the side portion 14 of one of the arms 11 associated therewith, is at least one retention element 15 movable by first actuating means consisting of a first fluid-operated actuator 16 for example, between a thrust condition in which it acts against one side 2a of the cassette 2 to retain it on the collapsible support, and a release condition in which it is disengaged from the cassette 2 in order to make said cassette fall into the processing station 3 and more particularly into the fitting guide pieces 4 of said station when the collapsible support 9 is in the dropped position.

In fact, in the dropped position the collapsible support 9 and more particularly the arms 11 associated therewith are provided to extend substantially in the extension of the fitting guide pieces 4, so that the vertically oriented cassette 2 released from the collapsible support may be securely and exactly fitted in said guide pieces arranged in the extended position.

Also provided is the presence of at least one stop element 17 movable between an operating position in which it is disposed along the falling path of the cassette 2 in the processing station 3 in order to stop said cassette when it has reached the predetermined positioning, and a non-operating position in which it is out of said cassette path in order to enable the cassette itself to fall down from the processing station 3 after it has been loaded with magnetic tape. More particularly, in the example shown two stop elements 17 are provided which essentially consist of the rods of corresponding fluid-operated actuators 18 operable upon cmmand of said electronic control unit.

Advantageously, when the collapsible support 9 is in the dropped position, each of the stop elements 17 is at a distance from the lower end 11a exhibited by each of the arms 11 of the collapsible support 9, the amount of which substantially corresponds to, or is slightly greater than the cassette size in the vertical direction. In this manner, the location of the loading magazine 5 as near as possible to the processing station 3 is ensured, which is to best advantage because the cassette travel path and consequently also the overall bulkiness of the apparatus is reduced, which will bring about a gain in time when the cassette 2 is transferred to the processing station.

Also operatively engaged to the loading magazine 5 and more particularly the holding plate 6 opposite to the plate carrying the primary cylinder 10 is at least one second retention element 19 that, upon command of a third fluid-operated actuator 20 or equivalent actuating elements, can be selectively moved between a work position in which it acts in thrust relation on a cassette 2 disposed immediately on top of the cassette engaged on the collapsible support 9 in order to maintain the positioning of the stack 7 in the magazine 5, and a rest position in which it is disengaged from the cassette to let the cassettes of said stack 7 fall onto the collapsible support.

In order to prevent the support 9 from being dropped by the stack weight, due for example to an accidental cutout in the pneumatic and/or electric power supply to the cassette loading machine, which will bring about falling of the cassettes 2, the apparatus in question is advantageously provided with safety means 21 designed to rigidly fasten the collapsible support 9 to the magazine 5 when said support is at the rest position. In more detail, this safety means 21 essentially consists of at least one coupling portion 22 formed in the magazine 5 and for example embodied by a shaped plate fastened to one of the holding plates 6 and exhibiting a recess 22a adapted to operatively receive the first retention element 15 when the latter is returned to the release condition after the collapsible support 9 has been brought to the corresponding rest position. In other words, the engagement of the first retention element 15 in the recess 22a causes the coupling portion 22 to resist the force due to the stack weight that otherwise could lead the collapsible support 9 to the dropped position. In the accompanying drawings, 23 denotes a pusher element that in a manner known per se is horizontally movable below the loading station 3 in order to make the cassettes 2 move sequentially forward along a collection element 24 as said cassettes are released from the processing station itself.

Still in known manner, in order to avoid the individual cassettes 2 falling directly on the collection element 24, the presence of a support disc 25 is also provided. Said disc 25 is vertically movable, upon command of an auxiliary actuator not shown in the figures, between a raised position in which it receives and supports the cassette 2 coming out of the fitting guide pieces 4 and a lowered position in which it is disposed substantially flush with a base surface 24a of the collection element 24 in order to deposit the cassette thereon.

Also formed in the collection element 24, immediately downstream of the disc 25 with reference to the cassette feeding direction, is a transverse slot 26 through which possible faulty cassettes 2 are discharged from the collection element 24. To this end, associated with the slot 26 is one or more closing elements 27 consisting of blocks connected to corresponding fluid-operated actuators, selectively movable between a closing position in which they close off the cassette exit through the slot 26 in order to enable transferring of said cassettes along the collection element 24, and a opening condition in which they completely clear the slot in order to enable faulty cassettes to be discharged therethrough.

The operating cycle of the apparatus in question described above mainly as regards structure, is as follows.

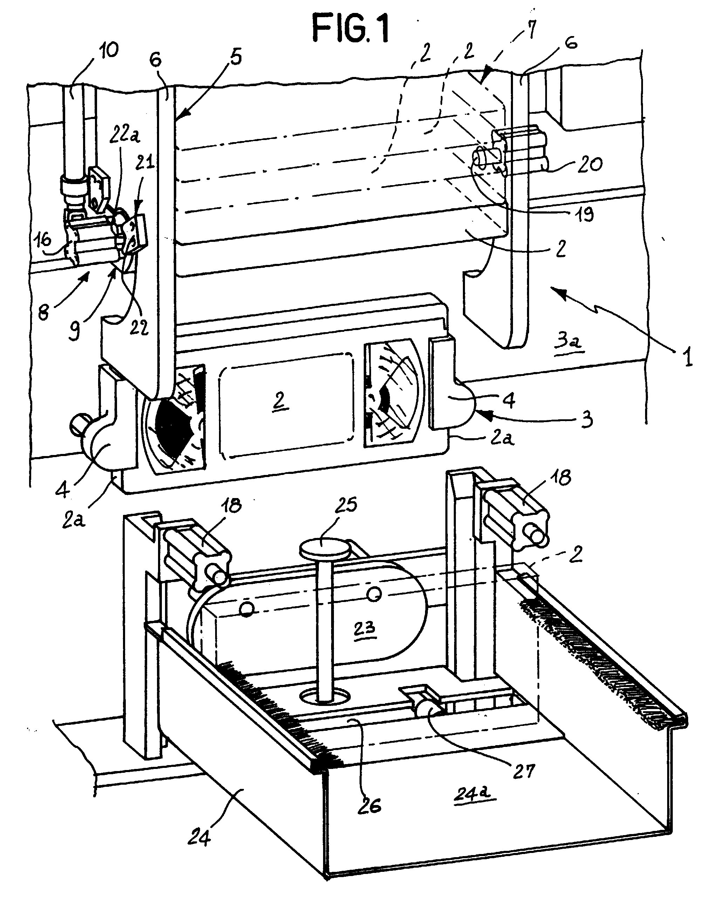

As shown in Fig. 1, when tape is being wound into a cassette 2 engaged in the processing station 3, the collapsible support 9 is held in the rest position upon the action of the primary cylinder 10, so that the bottommost cassette 2 in the stack 7 arranged in the loading magazine 5 is suitably engaged to the arms 11 of the collapsible support itself.

Under this situation the first retention element 15 is in the release position and, due to its engagement in the recess 22a of the coupling portion 22, no risks exist that the cassettes 2 may fall out of the magazine 5, should the pneumatic and/or electric power supply to the tape loading machine be accidentally cut off.

At the end of the tape winding operation within the cassette 2 being processed, the fitting guide pieces 4 are moved away from the front wall 3a in order to cause the disengagement of the cassette from the processing station 3. The cassette 2 loaded with magnetic tape will be brought to rest on the disc 25 previously disposed to the raised position to be then put down onto the base surface 24a of the collection element 24, upon lowering of the disc.

Simultaneously with the disengagement of the loaded cassette 2 from the processing station 3, the first retention element 15 is brought to the thrust condition, and the collapsible support 9 is moved to the dropped position in order to orient the cassette 2 engaged thereto vertically. The second retention element 19 previously borught to the work position upon command of the corresponding actuator 20, conveniently retains the cassette stack 7 preventing the cassettes from falling out of the magazine 5.

When the collapsible support 9 reaches the dropped position, the first retention element 15 is brought to the release condition to cause the cassette 2 carried by the support to fall vertically into the fitting guide pieces 4, stopping against the stop elements 17 previously disposed in the operating position. Under this situation, the cassette 2 is completely disengaged from the collapsible support 9, which support therefore can be returned to the rest condition, upon disposition of the first retention element 15 to the thrust condition in order to prevent the latter from interferring with the coupling portion 22 when the collapsible support carries out a raising movement. Once the collapsible element 9 has reached the rest position, the first retention element 15 is brought again to the release condition and is fitted into the recess 22a while the second retention element 19 is brought to the rest position to cause lowering of the stack 7 between the holding plates 6 and consequent engagement of a new cassette 2 on the collapsible support 9.

Meanwhile, the fitting guide pieces 4 are moved close to the front wall 3a to operatively engage the cassette 2 in the processing station 3, thereby starting a new magnetic tape winding cycle.

The present invention attains the intended purposes.

The apparatus in question is in fact conceived in such a manner that it enables the positioning of the magazine 5 very close to the processing station 3, which involves an important reduction in bulkiness as compared to the apparatus of the known art as well as a drastic reduction in the time necessary to transfer the individual cassettes from the magazine to the processing station.

In addition the invention becomes of much simpler construction as compared to the feeding apparatus of the known art, since the guide plates and movement means connected thereto for causing the gradual orientation of the cassette from an inclined position to a vertical position (as required for insertion in the processing station) are eliminated.

Obviously many modifications and variations may be made to the invention as conceived, without departing from the scope of the invention as defined in the appended claims.

In particular the apparatus in question described with specific reference to feeding of VHS video cassettes to machines for winding tape thereinto, can be adapted to carry out, in the same manner as described above, feeding of cassettes of different types as well as box-shaped elements, such as tape cassette or compact-disc casings, to machines for executing other processings provided in the production cycle of articles of the type in question.

## Claims

1. A cassette feeding apparatus in all automatic machine for loading tape into said cassettes comprising:
- a loading magazine (5) located at an overhead position relative to a processing station (3) of said cassette loading machine and engaging a plurality of horizontally oriented cassettes (2) disposed consecutively upon each other to form an upright stack (7);
- transferring means (8) for picking up from said stack (7) a cassette (2) situated at the bottom and transferring it to said processing station (3), while disposing the cassette according to a substantially vertical orientation,
whereby said transferring means (8) comprises:
- a collapsible support (9) oscillatably engaged under the loading magazine (5);
- drive means for moving the collapsible support between a rest position in which it is substantially oriented in a horizontal plane for supporting at least one cassette (2) disposed at a lowermost position in said stack (7), and an overturned or dropped position in which it is oriented in an angle to the horizontal plane, characterized in that the collapsible support in the over turned or dropped position is oriented in a substantially vertical plane for orienting said cassette (2) vertically ;
- at least one retention element (15) is operatively engaged to the collapsible support and movable between a thrust condition in which it acts on said cassette to retain it on the collapsible support, and a release condition in which it is disengaged from said cassette;
- first actuating means (16) are acting on the first retention element (15) for selectively moving it to the thrust condition when the collapsible support is in its rest position, and to the release condition when the collapsible support is in the dropped position, to let the cassette fall vertically into said processing station.

2. An apparatus according to claim 1, characterized in that it further comprises safety means (21) for rigidly fastening the collapsible support (9) in its rest position to the loading magazine (5).

3. An apparatus according to claim 2, characterized in that said safety means (21) comprises a coupling portion (22) formed in said loading magazine (5) and exhibiting a recess (22a) arranged to house the first retention element (15) when the latter is returned to the release condition after the support (9) has been brought to its rest position.

4. An apparatus according to claim 1, characterized in that it further comprises at least one stop element (17) movable between an operating position in which it is disposed on the falling path of the cassette (2) in the processing station (3) in order to stop the cassette itself to a predetermined positioning, and a non-operating position in which it is outside said path to let the cassette (2) fall from the processing station (3).

5. An apparatus according to claim 4, characterized in that, when the collapsible support (9) is in the dropped position, the stop element is at a distance from a lower end (11a) of the collapsible support itself by an amount substantially corresponding to the cassette size in the vertical direction.

6. An apparatus according to claim 1, characterized in that, in the dropped position, the collapsible support (9) extends substantially in the extension of the fitting guide pieces (4) associated with the processing station (3) and arranged to operatively engage the cassette (2) on opposite sides.

7. An apparatus according to claim 1, characterized in that said collapsible support (9) comprises a pair of arms (11) extending in cantilevered fashion from a horizontal pivot stem (12) rotatably engaged to the loading magazine (5), each of said arms (11) exhibiting a base portion (13) arranged to offer a resting seat (13a) for the cassette (2) when the collapsible support (9) is in the rest position, and a side portion (14) arranged to act along one side (2a) of the cassette (2) to guide the fall of the cassette when the collapsible support (9) is in the dropped position.

8. An apparatus according to claim 1, characterized in that it further comprises:
- at least one second retention element (19) operatively engaged to the loading magazine (5) and movable between a work position in which it acts on a cassette (2) disposed immediately on top of the cassette (2) engaged on the collapsible support (9) for maintaining the positioning of said stack (7) in the magazine itself, and a rest position in which it is disengaged from said immediately overlying cassette to let the cassettes forming said stack (7) fall onto the collapsible support (9);
- actuation means (20) associated with the second retention element (19) for selectively bringing it to the work position when the collapsible support (9) moves to the dropped position, and to the rest position when the collapsible support itself has taken the rest position again.

9. A method of feeding tape cassettes in an automatic machine for loading tape into said cassettes, comprising the steps of :
- arranging a plurality of cassettes (2) in a horizontal orientation one upon the other to form a stack (7) extending vertically at an overhead position relative to a processing station (3) of said cassette loading machine;
- disposing at least one cassette (2) located at a lowermost position in said stack (7) onto a collapsible support (9) arranged in a rest position in which it horizontally supports the cassette itself while the cassette is still located at the lowermost position in said stack;
- moving the collapsible support (9) to a dropped position in which the cassette is oriented in an angle to the horizontal orientation,
characterized by
- maintaining the positioning of said cassette (2) on the collapsible support (9) by retaining means (15);
- said dropped position of the collapsible support is a position in which the cassette retained thereon is oriented in a substantially vertical plane;
- releasing the cassette (2) from the collapsible support (9) to let it fall vertically into said processing station (3).

10. A method according to claim 9, characterized in that simultaneously with the overturning or dropping step, the step of maintaining the positioning of the cassettes (2) in said stack (7) on top of the cassette retained on the collapsible support (9) is also carried out.

11. A method according to claim 9, characterized in that it further comprises the step of intercepting the fall of the cassette (2) in the processing station (3) for stopping said cassette to a predetermined positioning.

## Patentansprüche

1. Beschickungsanlage für Kassetten in einer automatischen Maschine für die Aufladung von Bändern in die Kassetten,
umfassend:
- ein Lademagazin (5), das in einer oberhalb einer Arbeitsstation (3) der automatischen Maschine für die Aufladung angeordnet ist und eine Vielzahl von Kassetten (2) ergreift, die horizontal ausgerichtet und aufeinander zur Bildung eines senkrechten Stapels (7) angeordnet sind;
- Übergabemittel (8) zur Entnahme einer unterhalb des Stapels (7) angeordneten Kassette (2) und deren Übergabe an die Arbeitsstation (3), wobei die Kassette selbst gemäß einer im wesentlichen senkrechten Ausrichtung angeordnet wird, wobei die Übergabemittel (8) umfassen:
- einen unterhalb des Lademagazins (5) verschwenkbaren in Eingriff stehenden, abschlagbaren Halter (9);
- Steuermittel (10) zur Verstellung des abschlagbaren Halters zwischen einer Ruhestellung, in der er im wesentlichen gemäß einer horizontalen Ebene zur Abstützung mindestens der unterhalb des Stapels (7) liegenden Kassette (2) ausgerichtet ist, und einer abgekippten bzw. abgeschlagenen Position, in der er gemäß einem Winkel gegenüber der horizontalen Ebene ausgerichtet ist,
dadurch gekennzeichnet, daß
- der abschlagbare Halter in der abgekippten bzw. abgeschlagenen Position gemäß einer im wesentlichen senkrechten Ebene ausgerichtet ist, um die Kassette (2) senkrecht auszurichten;
- mindestens ein erstes Klemmelement (15) am abschlagbaren Halter wirksam in Eingriff steht und zwischen einem Schubzustand, in der er auf die Kassette einwirkt, um sie am abschlagbaren Halter selbst zurückzuhalten, und einem Freigabezustand beweglich ist, in der es von der Kassette befreit ist;
- erste Betätigungsmittel (16) auf das erste Klemmelement (15) wirken, um es wahlweise im Schubzustand, wenn der abschlagbare Halter sich in Ruhestellung befindet, und im Freigabezustand zu verstellen, wenn sich der abschlagbare Halter in der abgeschlagenen Position befindet, um die Kassette in die Arbeitsstation senkrecht fallen zu lassen.

2. Anlage nach Anspruch 1, dadurch gekennzeichnet, daß sie überdies Sicherheitsmittel (21) umfaßt, um am Lademagazin (5) den abschlagbaren Halter (9) in seiner Ruheposition starr festzulegen.

3. Anlage nach Anspruch 2, dadurch gekennzeichnet, daß die Sicherheitsmittel (21) einen Einsteckabschnitt (22) umfassen, der im Lademagazin (5) ausgenommen ist und eine Hinterschneidung (22a) umfaßt, die zur Aufnahme des ersten Klemmelementes (15) bereitgestellt ist, wenn dieses letztere in den Freigabezustand zurückgeführt wird, nachdem der Halter (9) in die Ruhestellung gebracht wurde.

4. Anlage nach Anspruch 1, dadurch gekennzeichnet, daß sie überdies mindestens ein Arretierelement (17) umfaßt, das zwischen einer Arbeitsstellung, in der es sich auf der Fallbahn der Kassette (2) in der Arbeitsstation (3) zum Anhalten der Kassette selbst gemäß einer vorgegebenen Positionierung angeordnet ist, und einer Stellung außer Wirkung beweglich ist, in der es sich außerhalb der Fallbahn befindet, um die Kassette (2) aus der Arbeitsstation (3) fallen zu lassen.

5. Anlage nach Anspruch 4, dadurch gekennzeichnet, daß, wenn sich der abschlagbare (9) Halter in der abgeschlagenen Position befindet, das Arretierelement von unterem Ende (11a) des abschlagbaren Halters selbst um ein Maß beabstandet ist, das im wesentlichen der Abmessung der Kassette (2) in senkrechter Richtung entspricht.

6. Anlage nach Anspruch 1, dadurch gekennzeichnet, daß in der abgeschlagenen Position der abschlagbare Halter (9) sich im wesentlichen auf dem Fortsatz von Einrückführungen (4) erstreckt, die der Arbeitsstation (3) zugeordnet und dazu bereitgestellt sind, wirksam die Kassette (2) auf seitlich abgewandten Abschnitten zu ergreifen.

7. Anlage nach Anspruch 1, dadurch gekennzeichnet, daß der abschlagbare Halter (9) ein Paar von Armen (11) umfaßt, die sich auskragend von einem horizontalen Anlenkbolzen (12) erstrecken, der gegenüber dem Lademagazin (5) drehbar in Eingriff steht, wobei jeder dieser Arme (11) einen Basisabschnitt (13), der dazu bereitgestellt ist, eine Anlageaufnahme (13a) für die Kassette (2) zu bilden, sobald der abschlagbare Halter (9) sich in der Ruhestellung befindet, und einen seitlichen Abschnitt (14) umfaßt, der dazu bereitgestellt ist, längs einer Flanke (2a) der Kassette (2) zu wirken, um deren Fall zu führen, sobald sich der abschlagbare Halter (9) in der abgeschlagenen Position befindet.

8. Anlage nach Anspruch 1, dadurch gekennzeichnet, daß sie überdies umfaßt:
- mindestens ein zweites Klemmelement (19), das am Lademagazin (5) wirksam angreift und zwischen einer Arbeitsstellung, in der es auf die unmittelbar oberhalb der am abschlagbaren Halter (9) in Eingriff stehenden Kassette (2) liegenden Kassette (2) wirkt, um die Positionierung des Stapels (7) im Magazin selbst zu blockieren, und einer Ruhestellung beweglich ist, in der es von der unmittelbar darüberliegenden Kassette befreit ist, um die Kassette des Stapels (7) auf den abschlagbaren Halter (9) fallen zu lassen;
- Aktiviermittel (20), die dem zweiten Klemmelement (19) zugeordnet sind, um es wahlweise in die Arbeitsstellung, sobald sich der abschlagbare Halter (9) in die abgeschlagene Position bewegt, und in die Ruhestellung zu bringen, sobald der abschlagbare Halter selbst in die Ruhestellung zurückgebracht wurde.

9. Verfahren zur Beschickung von Bandkassetten in einer automatischen Maschine für die Aufladung von Bändern in die Kassetten, umfassend die Arbeitsschritte:
- Bereitstellung einer Vielzahl von Kassetten (2) gemäß einer horizontalen Ausrichtung und gegenseitig aufeinander liegend zur Bildung eines Stapels (7), der sich senkrecht in einer oberhalb einer Arbeitsstation (3) der Maschine zum Laden senkrecht erstreckt,
- Anordnung mindestens einer unterhalb des Stapels (7) angeordneten Kassette (2) in Auflage auf einen abschlagbaren Halter (9), der in einer Ruhestellung bereitgestellt ist, in der er die Kassette selbst horizontal abstützt, während die Kassette sich noch in der untersten Stellung in diesem Stapel befindet;
- Anordnung des abschlagbaren Halters (9) in einer abgeschlagenen Stellung, in der die Kassette gemäß einem Winkel gegenüber der horizontalen Ausrichtung ausgerichtet ist,
gekennzeichnet durch
- Blockierung der Positionierung der Kassette (2) auf dem abschlagbaren Halter (9) durch Klemmittel (15);
- wobei die abgeschlagene Stellung des abschlagbaren Halters eine Stellung ist, in der die auf ihm geklemmte Kassette gemäß einer im wesentlichen senkrechten Ebene ausgerichtet ist;
- Freigabe der Kassette (2) vom abschlagbaren Halter (9), um sie senkrecht in die Arbeitsstation (3) fallen zu lassen.

10. Verfahren nach Anspruch 9, dadurch gekennzeichnet, daß in Begleitung mit dem Arbeitsschritt des Umkippens bzw. des Abschlagens überdies der Arbeitsschritt durchgeführt wird, bei dem die Positionierung der Kassetten (2) des Stapels (7) blockiert wird, die oberhalb der auf dem abschlagbaren Halter (9) blockierten Kassette liegen.

11. Verfahren nach Anspruch 9, dadurch gekennzeichnet, daß es überdies den Arbeitsschritt umfaßt, bei dem der Fall der Kassette (2) in die Arbeitsstation (3) unterbrochen wird, um die Kassette selbst gemäß einer vorgegebenen Positionierung zu blockieren.

## Revendications

1. Appareil d'alimentation de cassettes dans une machine pour le chargement automatique de bandes dans lesdites cassettes, comprenant:
- un magasin de chargement (5) situé à une position surélevée par rapport à un poste de traitement (3) de ladite machine pour le chargement de cassettes et engageant une pluralité de cassettes (2) orientées horizontalement, disposées consécutivement les unes sur les autres à former une pile verticale (7);
- des moyens de transfert (8) pour saisir de ladite pile (7) une cassette (2) située au fond et la transférer audit poste de traitement (3) en la disposant selon une orientation sensiblement verticale,
où lesdits moyens de transfert (8) comportent:
- un support abattable (9) engagé de manière oscillatoire sous le magasin de chargement (5);
- des moyens de commande pour déplacer le support abattable entre une position de repos dans laquelle il est essentiellement orienté dans un plan horizontal pour soutenir au moins une cassette (2) disposée au fond dans ladite pile (7), et une position baissée ou renversée dans laquelle il est orienté selon un angle par rapport au plan horizontal, caractérisé en ce que le support abattable dans sa position baissée ou renversée est orienté dans un plan sensiblement vertical pour orienter verticalement ladite cassette (2);
- au moins un élément de retenue (15) est engagé de manière opérationnelle au support abattable et mobile entre une condition de poussée, dans laquelle il agit sur ladite cassette pour la bloquer sur le support abattable, et une condition de déblocage dans laquelle il est dégagé de ladite cassette;
- des premiers moyens d'actionnement (16) agissent sur le premier élément de retenue (15) pour le déplacer sélectivement à la condition de poussée quand le support abattable se trouve dans sa position de repos, et à la condition de déblocage quand le support abattable est dans sa position baissée, pour laisser tomber verticalement la cassette dans ledit poste de traitement.

2. Appareil selon la revendication 1, caractérisé en ce qu'il comporte en outre des moyens de sûreté (21) pour fixer rigidement au magasin de chargement (5) le support abattable (9) dans sa position de repos.

3. Appareil selon la revendication 2, caractérisé en ce que lesdits moyens de sûreté (21) comportent une portion d'accouplement (22) formée dans ledit magasin de chargement (5) et présentant un creux (22a) destiné à loger le premier élément de retenue (15) quand ce dernier est ramené à la condition de déblocage après le déplacement du support (9) à sa position de repos.

4. Appareil selon la revendication 1, caractérisé en ce qu'il comporte en outre au moins un élément d'arrêt (17) mobile entre une position de travail dans laquelle il est disposé sur le parcours de chute de la cassette (2) dans le poste de traitement (3), en vue d'arrêter la cassette elle-même à un positionnement prédéterminé, et une position de non travail dans laquelle il se trouve au-dehors dudit parcours pour laisser tomber la cassette (2) du poste de traitement (3).

5. Appareil selon la revendication 4, caractérisé en ce que, quand le support abattable (9) est dans sa position baissée, l'élément d'arrêt est écarté de l'extrémité inférieure (11a) du support abattable d'une distance sensiblement correspondant à la dimension de la cassette en direction verticale.

6. Appareil selon la revendication 1, caractérisé en ce que le support abattable (9) dans sa position baissée s'étend essentiellement dans l'extension des guidages d'insertion (4) associés au poste de traitement (3) et destinés à engager de manière opérationnelle la cassette (2) sur ses côtés opposés.

7. Appareil selon la revendication 1, caractérisé en ce que ledit support abattable (9) comporte une paire de bras (11) s'étendant en porte-à-faux d'un arbre d'articulation horizontal (12) engagé à pivotement au magasin de chargement (5), chacun desdits bras (11) présentant une portion de base (13) arrangée de manière à offrir un siège d'appui (13a) pour la cassette (2) quand le support abattable (9) est dans sa position de repos, et une portion latérale (14) destinée à agir le long de l'un (2a) des côtés de la cassette (2) pour guider la chute de la cassette quand le support abattable (9) est en position baissée.

8. Appareil selon la revendication 1, caractérisé en ce qu'il comporte en outre:
- au moins un deuxième élément de retenue (19) engagé de manière opérationnelle au magasin de chargement (5) et mobile entre une position de travail dans laquelle il agit sur une cassette (2) disposée immédiatement au-dessus de la cassette (2) engagée sur le support abattable (9), pour bloquer le positionnement de ladite pile (7) dans ledit magasin, et une position de repos dans laquelle il est dégagé de ladite cassette placée immédiatement au-dessus pour laisser tomber les cassettes formant ladite pile (7) sur le support abattable (9);
- des moyens d'actionnement (20) associés au deuxième élément de retenue (19) pour l'amener sélectivement à la position de travail quand le support abattable (9) se déplace à sa position baissée, et à la position de repos quand le support abattable lui-même a repris sa position de repos.

9. Méthode de chargement de cassettes à bande dans une machine pour le chargement automatique de bande dans lesdites cassettes, comprenant les étapes suivantes:
- arranger une pluralité de cassettes (2) selon une orientation horizontale les unes sur les autres à former une pile (7) s'étendant verticalement à une position surélevée par rapport au poste de traitement (3) de ladite machine de chargement de cassettes;
- disposer au moins une cassette (2) placée à la position la plus basse dans ladite pile (7) sur un support abattable (9) situé à une position de repos dans laquelle il soutient la cassette horizontalement pendant que la cassette se trouve encore à la position la plus basse dans ladite pile;
- déplacer le support abattable (9) à une position baissée dans laquelle la cassette est orientée selon un angle par rapport à l'orientation horizontale,
caractérisée par le fait de:
- bloquer le positionnement de ladite cassette (2) sur le support abattable (9) par l'intermédiaire de moyens de retenue (15);
- ladite position baissée du support abattable étant une position dans laquelle la cassette retenue sur celui-ci est orientée selon un plan essentiellement vertical;
- dégager la cassette (2) du support abattable (9) pour la laisser tomber verticalement dans ledit poste de traitement (3).

10. Méthode selon la revendication 9, caractérisée en ce que, simultanément à l'étape de déplacement du support abattable à la position renversée ou baissée, on effectue également l'étape de bloquer le positionnement des cassettes (2) dans ladite pile (7) au-dessus de la cassette retenue sur ledit support abattable (9).

11. Méthode selon la revendication 9, caractérisée en ce qu'elle comporte en outre l'étape d'intercepter la chute de la cassette (2) dans le poste de traitement (3) pour arrêter ladite cassette à un positionnement prédéterminé.
